# EUROPEAN PATENT SPECIFICATION

(11) **EP 2 750 889 B1**
(45) Date of publication and mention of the grant of the patent: **02.01.2019**
(21) Application number: 12750648.3
(22) Date of filing: 01.08.2012
(51) Int. Cl.: B32B 5/12, B32B 5/26, B32B 15/14, B32B 27/18, B32B 27/28, B32B 27/12

(54) **INTERLAMINAR TOUGHENING OF THERMOPLASTICS**
INTERLAMINARE HÄRTUNG VON THERMOPLASTEN
TREMPE INTERLAMINAIRE DE THERMOPLASTIQUES

(30) Priority: 29.08.2011 US 201161528561 P
(43) Date of publication of application: 09.07.2014
(73) Proprietor: Cytec Technology Corp., Wilmington, DE 19801 (US)
(72) Inventor: ROGERS, Scott, Alfred, Placentia, CA 92870 (US); PRATTE, James, Francis, Wilmington, DE 19807 (US)
(74) Representative: Vande Gucht, Anne
(86) International application number: PCT/US2012/049152
(87) International publication number: WO 2013/032620

(56) References cited:
- WO-A1-2011/038065
- GB-A- 1 570 000
- US-A- 4 957 801
- US-A1- 2006 052 334
- US-A1- 2011 017 867
- P. CORTÉS ET AL: "Structure-properties relations in titanium-based thermoplastic fiber-metal laminates", POLYMER COMPOSITES, vol. 27, no. 3, 1 June 2006 (2006-06-01), pages 264-270, XP55040262, ISSN: 0272-8397, DOI: 10.1002/pc.20189
- P. CORTES: "The Tensile and Fatigue Properties of Carbon Fiber-reinforced PEEK-Titanium Fiber-metal Laminates", JOURNAL OF REINFORCED PLASTICS AND COMPOSITES, vol. 23, no. 15, 1 October 2004 (2004-10-01), pages 1615-1623, XP55040412, ISSN: 0731-6844, DOI: 10.1177/0731684404039796
- JEN M H R ET AL: "Manufacturing and mechanical response of nanocomposite laminates", COMPOSITES SCIENCE AND TECHNOLOGY, ELSEVIER, UK, vol. 65, no. 5, 1 April 2005 (2005-04-01), pages 775-779, XP027688006, ISSN: 0266-3538 [retrieved on 2005-04-01]
- MCGRAIL P T ET AL: "Some aspects of interlaminar toughening: reactively terminated thermoplastic particles in thermoset composites", POLYMER, ELSEVIER SCIENCE PUBLISHERS B.V, GB, vol. 34, no. 4, 1 February 1993 (1993-02-01), pages 677-683, XP024120433, ISSN: 0032-3861, DOI: 10.1016/0032-3861(93)90347-D [retrieved on 1993-02-01]

## Description

### CROSS-REFERENCE TO RELATED APPLICATION

This application claims priority to U.S. Provisional Application No. 61/528,561, filed August 29, 2011.

### BACKGROUND

Conventionally, thermoplastic toughening agents have been added to thermoset resin systems to impart toughness and mitigate the brittleness of the composite material that would be present without thermoplastic toughening agents. For example, thermoplastic toughening particles or thermoplastic toughening agents have been used with structural composites to improve the toughness of thermoset resin-based systems. In contrast to thermoset resin systems, thermoplastic resin systems typically have not been reinforced with additional toughening material, as thermoplastic systems have been widely believed to have sufficient toughness properties. However, the aerospace and other industries have influenced the evolutionary development of composite materials by requiring improved performance, for example, improved toughness of thermoplastic material.

One of the many benefits of thermoplastic composites is the high matrix toughness that the polymer imparts. The interlaminar region is typically very small or nonexistent in consolidated laminates using the current state of the art thermoplastic composite prepregs. This configuration may allow easier transmission of the impact event into the next ply which spreads the damage area.

Conventional laminates require further improvement. Imparting improved toughness or compression after impact (CAI) performance of a consolidated laminate would be a useful advance in the art and could find rapid acceptance in the large commercial transport and/or military aerospace industries, among other industries requiring composite materials to perform in demanding environments.

### SUMMARY OF THE INVENTION

It has been found that by increasing the interlaminar region size and content of thermoplastic laminates, the compression after impact (CAI) performance is improved. Moreover, to improve the CAI toughness of the finished laminate, it is further required to address the remaining weakness within the inter-ply regions of the structure.

To address these issues, some embodiments herein are directed to a consolidated or unconsolidated thermoplastic composite structure having at least one structural layer composed of reinforcing fibers impregnated with a thermoplastic resin matrix, and at least one toughening layer on a surface of the structural layer. The toughening layer is configured to create an interlaminar region in a composite laminate and may take the form of a polymer film, woven or non-woven fibrous materials, free particles, a polymer layer or non-woven veil with toughening particles dispersed therein, unimpregnated or impregnated metal mesh.

A plurality of such structural layer is laid up in a stacking arrangement such that there is a toughening layer positioned between two adjacent structural layers. Due to this configuration, the CAI strength of the composite laminate, upon consolidation, is greater than the same laminate without the toughening layers.

### BRIEF DESCRIPTION OF THE DRAWINGS

Figure 1 shows the DSC curve of a control laminate formed of Cypek™ DSE matrix based, carbon-fiber reinforced unidirectional-tapes.
Figure 2 shows the DSC of an improved laminate formed of Cypek™ DSE matrix based, carbon fiber-reinforced unidirectional-tapes and glass toughening layers.
Figure 3 is a micrograph showing the interlaminar region of the control laminate formed of APC™-Cypek™ DSE matrix based, carbon fiber-reinforced unidirectional-tapes.
Figure 4 is a micrograph showing the interlaminar region of the laminate formed of Cypek™ DSE matrix based, carbon fiber-reinforced unidirectional-tapes and glass toughening layers.
Figure 5 is a micrograph showing the interlaminar region of a laminate formed of Cypek™DSE matrix based, carbon fiber-reinforced unidirectional-tapes and Cypek™DSE toughening film.

### DETAILED DESCRIPTION OF THE PREFERRED EMBODIMENT

In contrast to conventional composite materials containing thermoset resin systems toughened with interlaminar particles or layers that may be cross-linked, the thermoplastic resin matrix for the structural layer herein does not rely on cross-linking with toughening material to form a toughened layer. In some aspects, the toughening layer does not melt or has a high melt viscosity at the processing temperature, and thus, the toughening material does not migrate or blend extensively into the thermoplastic matrix resin in the fiber-reinforced structural layer. As a result, the thermoplastic matrix resin of the fiber-reinforced structural layer forms a well defined boundary at the interlaminar region, which in turn results in an inter-layer (or inter-ply) that provides discrete spacing between adjacent structural layers. In contrast, some thermoset resin-based composites have a less well-defined interlaminar region because the toughened layer may form a less discrete layer due to cross-linking between the resin and the toughening material. Early thermoset resin-based composites without toughening agents had little interlaminar area. However, tougheners have been used in some thermoset resin-based composites to create the inter-ply region. Nonetheless, toughening materials that may be suitable for thermoset resin systems may be incompatible with thermoplastic resin systems. Specifically, thermoplastic resin-based composites generally consolidate at temperatures greater than thermoset resin-based composites, and in some cases almost twice the typical thermoset resin curing temperature. Thus, toughening materials used in thermoset composites that melt and potentially thermally degrade prior to the thermoplastic processing temperature would not be compatible.

The processing temperature refers to the operating temperatures during the lamination of the thermoplastic structural layers, which is typically within the range of 20°C-40°C above the peak melt point in a Differential Scanning Calorimetry (DSC) scan for a semi-crystalline polymer, and 80°C - 150°C above the glass transition temperature (Tg) for an amorphous polymer.

Thermoplastic composite or laminate in this context includes a plurality of structural layers in a stacking arrangement, each composed of reinforcing fibers impregnated with a thermoplastic resin matrix. The resin matrix includes one or more thermoplastic resins, as the major component. Thus, the resin matrix has thermoplastic properties; however, the resin matrix may contain minor amounts of additives such as plasticizers, rheology modifiers, inorganic fillers, etc. For example, particulate inorganic fillers such as mica, silica, silicon carbide, aluminum nitride, boron nitride, aluminum oxide may be mixed with the thermoplastic resin(s). According to the invention, the thermoplastic resin is polyaryletherketone (PAEK). Polyaryletherketones (PAEK) are crystalline polymers and may include, but are not limited to, polyether ketone (PEK), polyetheretherketone (PEEK), polyether ketone ketone (PEKK) and polyetherketone etherketoneketone (PEKEKK). These thermoplastic resins have an inherent toughness, and thus, typical thermoplastic resins have not been conventionally considered a material that is in need of toughening. This toughness imparts good impact performance to the finished laminate. However, it has been found that toughening layers may be added to thermoplastic composites to further improve the toughness characteristics. The composite toughness may be measured as Compression After Impact (CAI) performance using test method ASTM D7136. In some instances, CAI performance exceeding 50 KSI may be obtained. More specifically, CAI performance may exceed 55, 60, 65, or 70 KSI. For example, laminates formed of semi-crystalline CYPEK®-DS-E unidirectional-tapes and toughening layers can provide CAI of 55 KSI. "Unidirectional tape" refers to a layer of resin-impregnated fibers, wherein the fibers are aligned along one direction.

Commercially available PAEK polymers include APC-2® PEEK, CYPFK®-DSM or DSE or FC, and CYPEK®-HTE, which are all commercially available from Cytec Engineered Materials/Cytec Industries Inc. Cypek™ DSE, DSM, FC, HTE are PEKK polymer grades from Cytec Industries Inc. DS stands for Declar specification, M stands for molding. HTE stands for high temperature extrusion, and FC stands for "fast crystallizing".

### Toughening materials

The toughening layers may take the form of continuous or perforated polymer films, woven or non-woven fibrous materials, free particles, a polymer layer containing particles dispersed therein, non-woven veil of randomly arranged polymeric fibers containing toughening particles dispersed therein, unimpregnated or impregnated metal mesh. Suitable materials for the toughening layer includes: high melting point and high molecular weight thermoplastic polymers; plasticized thermoplastic polymers; high flow polymers; semi-crystalline or fast crystallizing thermoplastic polymers; polymer hybrids of the matrix resin; multi-polymer alloys; ceramics such as alumina oxide and silicate; metals such as copper, silver, titanium, aluminum, and alloys thereof; and combinations of any of the above materials.

The selection of the materials or combination of materials for the toughening layers depends on the configuration of the toughening layer and the thermoplastic resin matrix of the fiber-reinforced structural layer. For the polymer film or veil containing toughening particles, the materials are selected to create a synergistic effect between the polymer film or veil and the toughening particles in the interlaminar region.

"High melting point thermoplastic polymer" refers to any thermoplastic polymer that has a melting temperature (Tₘ) greater than or equal to 280 °C, as measured by DSC, and a processing temperature (T_{process}) greater than or equal to 300 °C.

"High molecular weight thermoplastic polymer" refers to polymer having a number average molecular weight (MW) above 10,000.

"High flow polymer" refers to polymers with a melt viscosity of less than 600 Pa·s at an apparent shear rate of 10 s⁻¹ at the melt processing temperature, for example, Cypek™ DS-M at 340°C.

"Semi-crystalline polymer" refers to any thermoplastic polymer that displays a melting exotherm, as measured by DSC, for example, PEEK.

"Fast-crystallizing polymer" refers to semi-crystalline thermoplastic polymers that can achieve greater than or equal to 15% crystalline content upon being cooled at 10 °C/min or higher, for example, PEEK.

"Polymer hybrid of the matrix resin" refers to a co-polymer or grafted polymer to the base matrix polymer.

"Multi-polymer alloy" refers to a compatible or incompatible polymer blend of two different polymers.

Plasticized thermoplastic polymer refers to a thermoplastic polymer that has plasticizer blended in it. An example is diphenysulphone blended into PEEK.

For thermoplastic layer and veil containing toughening particles, the particles include microspheres such as glass microbeads or ceramic microspheres (e.g. Zeospheres). Alternatively, the toughening particles may be formed of a thermoplastic polymer different from the thermoplastic layer or thermoplastic veil in which the particles are dispersed.

In certain embodiments, two or more toughening materials may be extruded, and then ground to form particles. These particles are then placed onto the structural layer. Blends of different types of particles with different particle sizes may be used as toughening materials. Particles and mixtures thereof can be sprinkled onto a surface of a structural layer and melted to form the toughening layer. As an example, PEEK particles may be mixed with aluminum silicate or other type of inorganic particle(s) and then applied by sprinkling on the structural layer followed by melt lamination, optionally, with application of heat. In another embodiment, two different thermoplastic polymer particles of different melting points and/or melt viscosity are laminated at the lower melt processing temperature of the two polymers. As an example, a particle mixture of Cypek™ DSM (peak melt point = 300°C) particles and Cypek™ HTE (peak melt point = 355 - 360°C) particles are placed on the structural layer and then melt laminated at 340°C.

In yet another embodiment to increase toughness and to create an inter-ply region, metallic particles may be deposited on one or both surfaces of the structural layer, such as a unidirectional-tape of unidirectional carbon fibers impregnated with thermoplastic polymer. The metallic materials may be irregularly shaped, filamentary, or spherical particles, and have the added benefit of improving electrical conductivity in the composite.

In embodiments in which particles are used, the particles may be micro-sized. Preferably, the particles have particle size of greater than 3 microns.

In yet another embodiment, the toughening layer is a metal mesh. In a layup of multiple fiber-reinforced structural layers, a plurality of such metallic toughening layer is present in the interlaminar regions.

In yet another embodiment, the toughening layer is a fiberglass cloth. Moreover, the fiberglass cloth may be subjected to Chemical Vapor Deposition (CVD) to deposit a very thin layer of metal such as aluminum onto the glass fibers. The metal coating can each provide electrical conductivity to the inter-ply region . Furthermore, this metal coating can impart in-plane electrical conductivity which aids in reducing edge glow in the composite part (capacitive discharge in large composite structures like wing fuel tanks).

In yet another embodiment, the thermoplastic matrix resin and the toughening layer are made of the same thermoplastic resin, e.g. PAEK.

In some embodiments, a combination of a toughening polymer and one or more of toughening particles may be used. For example, the particles could be compounded in an extruder with the toughening polymer to create a material for inter-laminar toughening. For instance, glass particles or fibers compounded into a PEEK or PEKK polymer to form pellets or a film. Subsequently, the pellets or film may be applied to the structural layer through lamination or other process. As another example, Cypek™ DS-M (Peak melt point = 300 °C) particles and a PEEK (Peak melt point = 340 °C) resin can be combined, extruded, and applied as a film and laminated onto the structural layer. Similarly, PEEK particles and a Cypek™ DS-M resin can be combined, extruded, and applied as a film and laminated onto the structural layer, whereby the PEEK particles is only partially melted in the completely melted Cypek™ DS-M. Combinations of higher melting polymer particles with lower melting polymer matrices can be used such as Cypek™ FC (Peak melt point = 338 °C) or Cypek™ HT-E (Peak melt point = 355 °C-360 °C) particles in a Cypek™ DS-M resin.

In some embodiments, the toughening layer is at least semi-crystalline throughout the layer - meaning that the layer is semi-crystalline throughout the layer, or contains crystalline portions uniformly dispersed through the layer. Thus, an amorphous layer adjacent to a crystalline layer would not be considered at least semi-crystalline throughout because the material layer is predominantly amorphous in portions thereof. Specifically, the amorphous portion would not be considered at least semi-crystalline in that portion and thus would not be considered at least semi-crystalline throughout the layer. In some embodiments, the structural layers are unidirectional-tapes containing semi-crystalline polymers and the toughening layers are made of semi-crystalline polymers. Generally, amorphous resin is more susceptible to solvent attack, which is not a desirable effect. The two semi-crystalline polymers may have different melting points and different crystallization rates based on their chemical formulation such that, for a given cooling rate, each semi-crystalline polymer will yield a different crystalline content in the layer from the other with the lower crystalline content polymer (slower crystallization rate) layer providing the toughening layer. It is possible to use either higher or lower melting point polymers in concert to toughen the material.

The toughening layer may also be in the form of woven fibers (e.g. a woven fabric) or non-woven fibers (e.g. a veil or mat of randomly arranged fibers). If fibers are present they are preferable to be generally at least half the diameter of the structural reinforcing fibers in the structural layer. In some instances, toughening fibers and structural fibers are roughly the same diameter. For example, a reinforcing or structural fiber such as a carbon fiber may have a filament diameter of about 7 µm while a glass fiber to be used as a toughening material may have a filament diameter of about 5-9 µm. It is costly to make toughening fibers having a relatively small diameter in comparison to toughening fibers having roughly the same diameter as the structural fibers. Thus, submicron diameter fibers are generally not preferable.

Generally, more crystalline thermoplastics (i.e. having higher crystallinity) produce higher compressive strength and lower impact strength. In contrast, amorphous thermoplastics produce lower compressive strength and higher impact strength. In aspects herein, crystallinity is useful to provide resistance to solvent degradation. A higher value of crystalliniy (up to 35%) improves the polymer performance against this solvent attack. Crystallinity is measured by DSC. This type of thermoplastics is suitable for both the resin matrix of the structural layer and the toughening layers.

It is well known that the melting point and crystallinity rate of some PAEK polymers such as PEKK and PEKEKK can be changed by adjusting the terephthaloyl ("T") to isophthaloyl ("I") ratio ("T:I ratio"). In the current synthesis of PEKK, the "T" and "I" are controlled by the relative amounts of, terephthaloyl chloride and isophthaloyl chloride to make block co-polymer. Without wishing to be bound by theory, it is believed that increasing the amount of "I" segments puts more "kinks" in the polymer backbone, thereby slowing the rate and activation energy for a chain rotation to achieve the minimum energy configuration for crystalline formation. This results in a lower melt temperature and slower crystallization rate.

For most embodiments discussed above, the content of the toughening material is up to 20% by weight based on the total weight of the matrix resin in the laminate. The amount of the toughening material is sufficient to create a distinct interlaminar region between adjacent layers of resin-impregnated reinforcing fibers.

The thermoplastic resin matrixs of the structural layers are based on PAEK polymers (e.g. PEEK or PEKK), particularly suitable toughening materials include (i) polymer films made of PEKK, PEEK, PEK; (ii) glass fibers, carbon fibers, or aramid fibers in the form of chopped fibers, nonwoven mat or woven fabric (e.g. fiberglass cloth having area weight of 0.55 oz/yd²); (iii) particles made of PEEK, PEKK, PEK, or glass, and blend of particles thereof; (iv) metallic meshor particles made of aluminum, copper, titanium, nickel or combination thereof.

When the toughening material includes metallic mesh, the metallic mesh may be embedded in a toughening polymer such as PEEK or PEKK.

In one embodiment, the structural layer is composed of reinforcing fibers impregnated with a thermoplastic matrix resin, and the toughening layer is a veil of randomly arranged thermoplastic fibers having thermoplastic particles dispersed therein, wherein the thermoplastic matrix resin, the veil and the particles are made of different thermoplastic materials.

### Thermoplastic Structural Layers and Laminates

Adding a toughening material to the fiber reinforcing composite layer such as the unidirectional fiber-reinforced composite tape, i.e., a product having resin and fibers, may be accomplished through various applications such as hot lamination, surface application methods including electrostatic applications, of the toughening material after the uni-tape is produced. This process will keep the toughening material at the outer perimeter of the material where it is most effective. Further increases in the percentage by weight of toughening materials may require additional resin film to prevent starvation, i.e., a situation in which insufficient resin in the laminate will have voids due to locally high fiber volumes. This effort showed favorable low porosity within the laminate but did so by drawing resin away from the unidirectional-tape.

In certain embodiments, the toughness of thermoplastic unidirectional-tape made by aqueous slurry and melt impregnation methods is increased by laminating the toughening layer to the product on-line.

The term "fiber" as used herein has its ordinary meaning as known to those skilled in the art and may include one or more fibrous materials adapted for the reinforcement of composites. Fibers may take the form of any of particles, flakes, whiskers, short fibers, continuous fibers, sheets, plies, and combinations thereof. Continuous fibers may further adopt any of unidirectional, multi-dimensional (e.g. two-or three-dimensional), non-woven, woven, knitted, stitched, wound, and braided configurations, as well as swirl mat, felt mat, and chopped mat structures. Woven fiber structures may comprise a plurality of woven tows having less than about 1000 filaments, less than about 3000 filaments, less than about 6000 filaments, less than about 12000 filaments, less than about 24000 filaments, less than about 48000 filaments, less than about 56000 filaments, less than about 125000 filaments, and greater than about 125000 filaments. In further embodiments, the tows may be held in position by cross-tow stitches, weft-insertion knitting stitches, or a small amount of resin, such as a sizing. The reinforcing fibers in the structural layer preferably have a tensile strength of greater than 3500 MPa. The content of the reinforcing fibers in the structural layer is preferably at least 55 % by weight based on the total weight of the structural layer.

In some aspects, the fibers used in the structural component are generally of a uniform diameter and generally of a conventional diameter, such as about several micrometers to about the millimeter range. Thus, in some aspects, small diameter fibers may be costly and may be difficult to discern in an interlaminar region, and therefore not provide a discrete interlaminar region that is useful for the laminate disclosed herein.

The composition of the fibers may be varied, as necessary. Embodiments of the fiber composition may include, but are not limited to, glass, carbon, aramid, quartz, basalt, polyethylene, polyester, poly-p-phenylene-benzobisoxazole (PBO), boron, silicon carbide, polyamide, and graphite, and combinations thereof. In one embodiment, the fiber is carbon, fiberglass, aramid or other thermoplastic materials. The reinforcing fibers may be organic or inorganic. Further, the fibers may include textile architectures including those that are either continuous or non-continuous in form.

Structural fibers may include unidirectional tape or web, fiber, tow/preg, or fabric, and non-woven materials such as a mat or veil. Fiber reinforced composite materials are generally categorized as tape, woven cloth, non-woven cloth, paper, and mixtures thereof. "Tape" generally refers to uniaxial reinforcement fibers that extend along a single axis of the strip material. The term "cloth" generally refers to reinforcement fibers laid along at least two different axes within the strip material. Cloth is commercially available as bi-axial, tri-axial and quad-axial, indicating fibers extending in two, three, or four different axes, respectively. The fibers may optionally be woven with one another, or may be manufactured as non-woven cloth. A vast array of composite reinforcement fibers are commercially available, such as for example, carbon fibers, Kevlar® fibers, glass fibers, and aramid fibers.

The terms "matrix," "resin," and "matrix resin" as used herein refers to the resin composition in the structural layer, and may include minor amounts of optional additives such as inorganic fillers.

The term "prepreg" as used herein includes a sheet or layer of fibers that have been impregnated with a matrix material within at least a portion of their volume. Typically, a prepreg is in a malleable form that is ready for molding into a particular shape and curing into the final composite part. Such composite parts are commonly used in manufacturing load-bearing structural parts and particularly aerospace composite parts, such as wings, fuselages, bulkheads, control surfaces, motorcraft and other applications where toughness and impact are important.

The term "interleaf" as used herein has its ordinary meaning as known to those skilled in the art and includes a layer placed between other layers. In one embodiment, the interleaf may be positioned in the middle of a plane of a composite. For example, the interleaf is commonly found between layers of structural fibers.

"Interlaminar" refers to the region between two adjacent layers.

A laminate may be composed of multiple structural layers of fiber-reinforced resin or prepregs.

The term "layup" as used herein has its ordinary meaning as known to those skilled in the art and may include one or more prepregs that are placed adjacent one another. In certain embodiments, the prepregs within the layup may be positioned in a selected orientation with respect to one another. In a further embodiment, the prepregs may optionally be stitched together with a threading material in order to inhibit their relative motion from a selected orientation. In additional embodiments, "layups" may comprise any combination of fully impregnated prepregs, partially impregnated prepregs, and perforated prepregs as discussed herein. Layups may be manufactured by techniques that may include, but are not limited to, hand layup, automated tape layup (ATL), advanced fiber placement (AFP), and filament winding. The layups can then be cured, such as by autoclave, to form a composite article, wherein the toughening particles are localized in the interleaf and provide increased toughness and damage tolerance of the composite article due to the particles remaining discrete particles even after the curing process.

The terms "consolidated" and "unconsolidated" as used herein have their ordinary meaning as known to those skilled in the thermoplastic art. Consolidation of melt fusible thermoplastics generally includes heating sufficiently to deform the thermoplastic resin, consolidation of the resin, and cooling. Hot lamination is a typical consolidation process.

In some cases, the thermoplastic resin is solid at room temperature.

In some aspects, manufacturing methods include the hot lamination of toughener to the outside of the unidirectional-tape, which are typical methods used in the art.

The terms "approximately," "about," and "substantially" as used herein represent an amount close to the stated amount that still performs the desired function or achieves the desired result. For example, the terms "approximately," "about," and "substantially" may refer to an amount that is within less than 10% of, within less than 5% of, within less than 1% of, within less than 0.1% of, and within less than 0.01% of the stated amount.

The term "at least a portion of' as used herein represents an amount of a whole that comprises an amount of the whole that may include the whole. For example, the term "a portion of" may refer to an amount that is greater than 0.01% of, greater than 0.1% of, greater than 1% of, greater than 10% of, greater than 20% of, greater than 30% of, greater than 40% of, greater than 50% of, greater than 60%, greater than 70% of, greater than 80% of, greater than 90% of, greater than 95% of, greater than 99% of, and 100% of the whole.

### EXAMPLES

### Example 1 - Toughening with Glass

A test laminate was formed by placing two plies of BGF 104 1617 finish glass fabric (a glass reinforcement of .55 oz/ yd²) between plies of unidirectional-tapes containing Cypek™-DSE resin and Hexcel AS4 carbon fibers, which are unsized carbon fibers typically used in 12K fiber (12,000 filaments) of nominal 7 µm diameter. No additional resin film was used. A control laminate, which is the same as the above test laminate, but is not toughened with glass fabric, was also formed. CAI performance was measured using ASTM D7136. Tables 1 and 2 show the test results based on four test specimens.

**Table 1 - Control**

| Specimen # | Width in | Depth in | Depth of Dent in | Damaged Area (-3.0 dB Loss) in² | Damaged Area (-6.0 dB Loss) in² |
|---|---|---|---|---|---|
| 1 | 3.9970 | 0.1749 | 0.0235 | 0.5392 | 0.4688 |
| 2 | 3.9965 | 0.1731 | 0.0238 | 0.5568 | 0.4688 |
| 3 | 3.9970 | 0.1744 | 0.0248 | 0.4016 | 0.3632 |
| 4 | 3.9980 | 0.1752 | 0.0238 | 0.5264 | 0.4560 |
| Mean | 3.9971 | 0.1744 | 0.0240 | 0.5060 | 0.4392 |
| Dev. %COV | 0.0006 | 0.0009 | 0.0006 | 0.0707 | 0.0510 |
| Std. | 0.02 | 0.53 | 2.37 | 13.97 | 11.62 |

| Specimen # | Damaged Area (-18.0 dB Loss) in² | Impact Energy in*lbf | Peak Load lbf | Strength ksi | |
|---|---|---|---|---|---|
| 1 | 0.3840 | 1503 | 38983 | 55.8 | |
| 2 | 0.3888 | 1501 | 37561 | 54.3 | |
| 3 | 0.2832 | 1499 | 36731 | 52.7 | |
| 4 | 0.3408 | 1505 | 36215 | 51.7 | |
| Mean | 0.3492 | 1502 | 37372 | 53.6 | |
| | 0.0490 | 3 | 1208 | 1.8 | |
| Std. Dev. %COV | 14.03 | 0.17 | | 3.33 | |

**Table 2- Toughened with glass**

| Specimen # | Width in | Depth in | Depth of Dent in | Damaged Area (-3.0 dB Loss) in² | Damaged Area (-6.0 dB Loss) in² |
|---|---|---|---|---|---|
| 1 | 4.0010 | 0.1758 | 0.0253 | 0.8504 | 0.6336 |
| 2 | 4.0010 | 0.1755 | 0.0263 | 0.9504 | 0.7488 |
| 3 | 4.0015 | 0.1767 | 0.0260 | 0.6096 | 0.5312 |
| 4 | 4.0010 | 0.1737 | 0.0275 | 0.7184 | 0.5760 |
| Mean | 4.0011 | 0.1754 | 0.0263 | 0.7822 | 0.6224 |
| Std. Dev. %COV | 0.0002 | 0.0013 | 0.0009 | 0.1492 | 0.0941 |
| | 0.01 | 0.72 | 3.49 | 19.08 | 15.12 |

| Specimen # | Damaged Area (-18.0 dB Loss) in² | Impact Energy in*lbf | Peak Load lbf | Strength ksi | |
|---|---|---|---|---|---|
| 1 | 0.4032 | 1503 | 39742 | 56.5 | |
| 2 | 0.4848 | 1498 | 38904 | 55.4 | |
| 3 | 0.4144 | 1503 | 38178 | 54.0 | |
| 4 | 0.4016 | 1503 | 37943 | 54.6 | |
| Mean | 0.4260 | 1502 | 38692 | 55.1 | |
| Std. Dev. | 0.0396 | 2 | 811 | 1.1 | |
| % COV | 9.30 | 0.17 | 2.10 | 1.97 | |

The glass fabric was found to improve the CAI performance when compared to the control laminate. The glass inter-ply toughening material increased CAI to 57 KSI (normalized to cure ply thickness), an improvement of 2 ksi over the control product. The un-normalized CAI strength for the glass-toughened laminate was 55.1 ksi while the un-normalized control was 53.6 ksi.

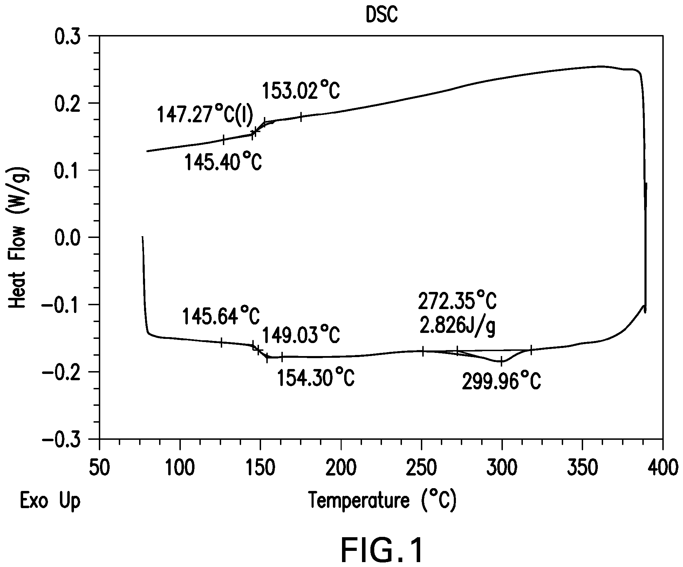

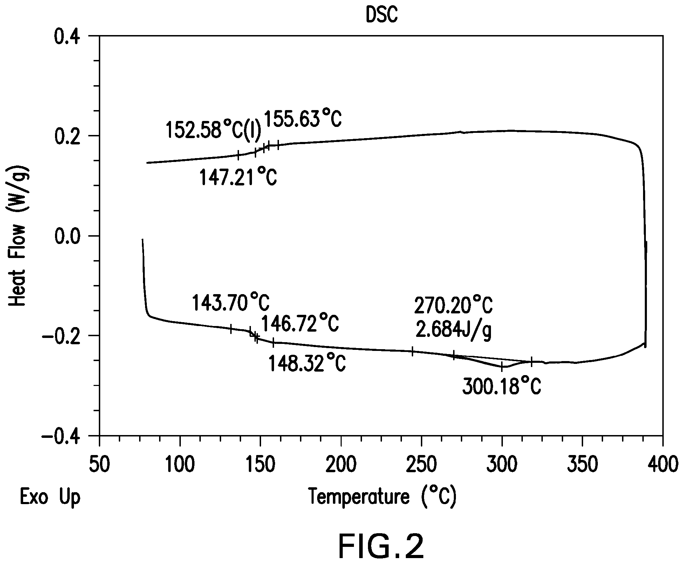

FIG. 1 shows the DSC curve of the control laminate formed of Cypek™ DSE matrix based, carbon fiber-reinforced unidirectional-tapes, and FIG. 2 shows the DSC of the laminate with glass toughening layers.

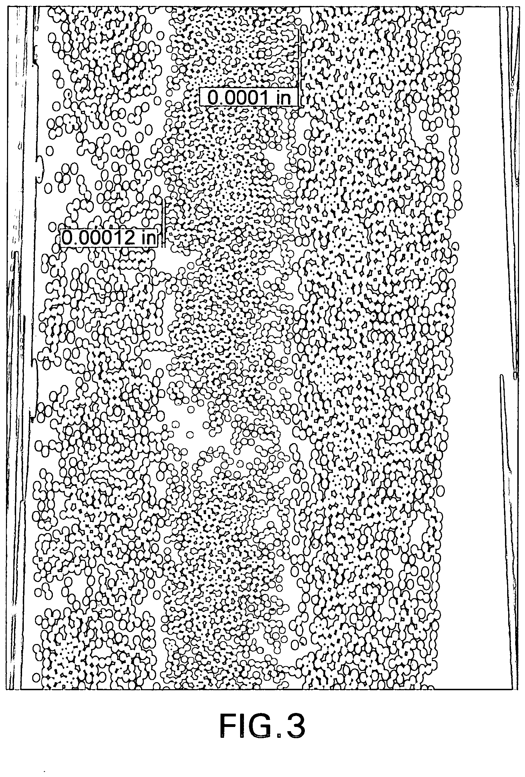

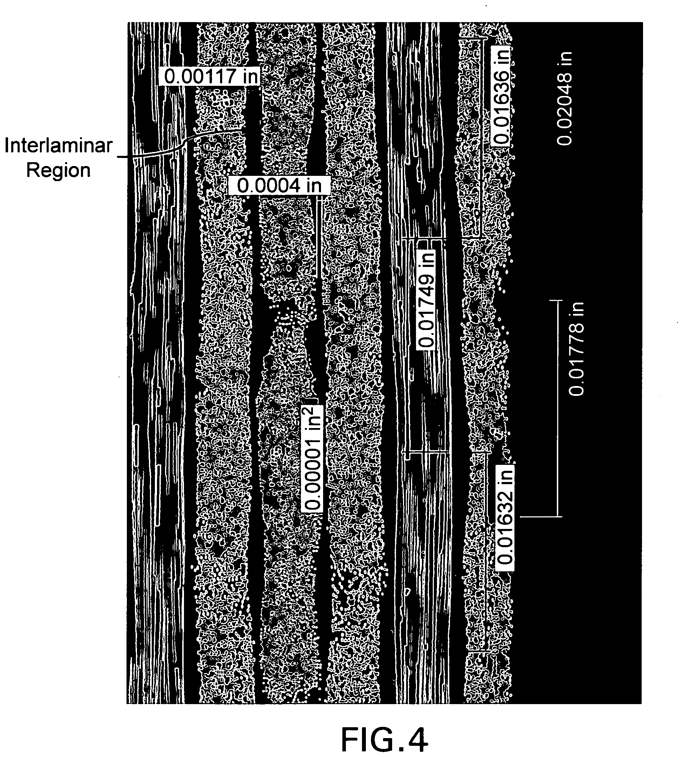

FIG. 3 is a micrograph showing the interlaminar region of the control laminate formed of Cypek™ DSE matrix based, carbon fiber-reinforced unidirectional-tapes. FIG. 4 is a micrograph showing the interlaminar region of the laminate formed of Cypek™ DSE matrix based, carbon fiber-reinforced unidirectional-tapes and glass toughening layers.

### Example 2 - Toughening with Thermoplastic Film

The same method was used to form a test laminate as discussed in Example 1 above except a 0.25 mil Cypek™-DSE film was used as an interleaf for toughening instead of glass fabric. CAI performance was measured using ASTM D7136. Table 3 shows the test results based on four test specimens.

**Table 3 - Toughened with Cypek™ DSE**

| Specimen # | Width in | Depth in | Depth of Dent in | Damaged Area (-3.0 dB Loss) in² | Damaged Area (-6.0 dB Loss) in² |
|---|---|---|---|---|---|
| 1 | 4.0005 | 0.1795 | 0.0235 | 0.4800 | 0.4352 |
| 2 | 4.0003 | 0.1786 | 0.0280 | 0.5104 | 0.4560 |
| 3 | 4.0010 | 0.1785 | 0.0230 | 0.5136 | 0.4400 |
| 4 | 4.0002 | 0.1797 | 0.0250 | 0.5584 | 0.4880 |
| Mean | 4.0005 | 0.1791 | 0.0249 | 0.5156 | 0.4548 |
| Std. Dev. | 0.0004 | 0.0006 | 0.0022 | 0.0323 | 0.0239 |
| % COV | 0.01 | 0.34 | 9.05 | 6.26 | 5.24 |

| Specimen # | Damaged Area (-18.0 dB Loss) in² | Impact Energy in*lbf | Peak Load lbf | Strength ksi | Nom Strength ksi |
|---|---|---|---|---|---|
| 1 | 0.3280 | 1498 | 41334 | 57.6 | 60.3 |
| 2 | 0.3680 | 1498 | 38981 | 54.6 | 56.9 |
| 3 | 0.3616 | 1497 | 41272 | 57.8 | 60.2 |
| 4 | 0.3952 | 1507 | 36321 | 50.5 | 53.0 |
| Mean | 0.3632 | 1500 | 39477 | 55.1 | 57.6 |
| Std. Dev. | 0.0276 | 5 | 2372 | 3.4 | 3.5 |
| %COV | 7.60 | 0.31 | 6.01 | 6.15 | 6.00 |

Cypek™ DSE film was found to improve the compression after impact performance. 55.1 ksi un-normalized vs. 53.6 ksi un-normalized for the control was achieved.

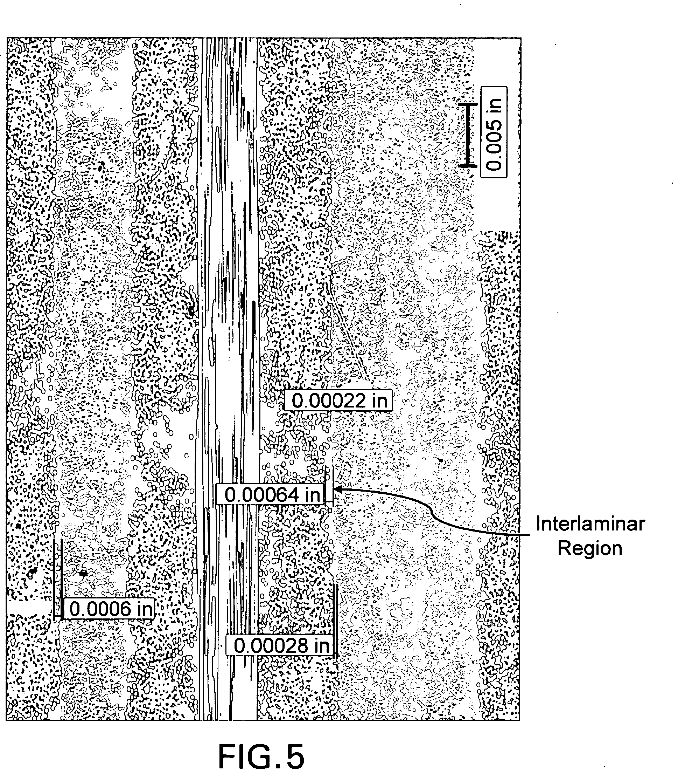

FIG. 5 is a micrograph showing the interlaminar region of the laminate formed according to this Example.

### Example 3 - Toughening with Glass and Thermoplastic Film

Test laminates were made by laying up unidirectional-tapes of AS4 carbon fibers impregnated with Cypek™ DSE resin, and inserting two plies of fiberglass cloth (0.72 oz/yd²) and two plies of 0.24 mil Cypek™ DSE film between adjacent unidirectional-tapes. These were processed alongside a control laminate using standard cure process conditions of 710 °F/100 psi. The CAI strength was measured using ASTM D7136. Tables 4 and 5 show the test results based on four test specimens.

**Table 4 - Control**

| Specimen # | Width in | Depth in | Depth Of Impact Initial in | Damaged Area (-3.0 dB Loss) in² | Damaged Area (-6.0 dB Loss) in² |
|---|---|---|---|---|---|
| 1 | 3.9987 | 0.1721 | 0.0218 | 0.5216 | 0.4608 |
| 2 | 3.9983 | 0.1734 | 0.0213 | 0.5968 | 0.5264 |
| 3 | 3.9975 | 0.1727 | 0.0220 | 0.5344 | 0.4704 |
| 4 | 3.9983 | 0.1737 | 0.0248 | 0.5840 | 0.4784 |
| Mean | 3.9982 | 0.1730 | 0.0225 | 0.5592 | 0.4840 |
| Std. Dev. | 0.0005 | 0.0007 | 0.0016 | 0.0368 | 0.0292 |
| %COV | 0.01 | 0.42 | 7.02 | 6.58 | 6.03 |

| Specimen # | 9.6 Damaged Area (-18.0 dB Loss) in² | Impact Energy in-lbs/in | Peak Load lbf | Strength ksi | |
|---|---|---|---|---|---|
| 1 | 0.3648 | 1498 | 35663 | 51.8 | |
| 2 | 0.4096 | 1506 | 34626 | 49.9 | |
| 3 | 0.3664 | 1498 | 34308 | 49.7 | |
| 4 | 0.3616 | 0 | 33233 | 47.9 | |
| Mean | 0.3756 | 1126 | 34458 | 49.8 | |
| Std. Dev. | 0.0228 | 750 | 1000 | 1.6 | |
| %COV | 6.06 | 66.66 | 2.90 | 3.26 | |

**Table 5 - Toughened with glass/Cypek™ PEKK**

| Specimen # | Width in | Depth in | Depth of Dent After Impact in | Damaged Area (-3.0 dB Loss) in² | Damaged Area (-6.0 dB Loss) in² |
|---|---|---|---|---|---|
| 1 | 4.0005 | 0.2326 | 0.0263 | 0.4720 | 0.3952 |
| 2 | 4.0010 | 0.2338 | 0.0250 | 0.4800 | 0.4192 |
| 3 | 3.9978 | 0.2324 | 0.0235 | 0.5024 | 0.4432 |
| 4 | 3.9993 | 0.2321 | 0.0260 | 0.4272 | 0.3680 |
| Mean | 3.9997 | 0.2327 | 0.0252 | 0.4704 | 0.4064 |
| Std. Dev. | 0.0014 | 0.0007 | 0.0013 | 0.0315 | 0.0322 |
| %COV | 0.04 | 0.32 | 5.01 | 6.71 | 7.93 |

| Specimen # | Damaged Area (-18.0 dB Loss) in² | Impact Energy in-lbs/in | Peak Load lbf | Strength ksi | |
|---|---|---|---|---|---|
| 1 | 0.2800 | 1510 | 53303 | 57.3 | |
| 2 | 0.3008 | 1507 | 48717 | 52.1 | |
| 3 | 0.3216 | 1504 | 53708 | 57.8 | |
| 4 | 0.2816 | 1507 | 49052 | 52.8 | |
| Mean | 0.2960 | 1507 | 51195 | 55.0 | |
| Std. Dev. | 0.0195 | 2 | 2677 | 3.0 | |
| %COV | 6.59 | 0.16 | 5.23 | 5.38 | |

For the control Cypek™-DSE matrix based, carbon fiber-reinforced laminate, CAI strength was 49.8 ksi after 1500 in-lb/in impact energy testing. For the laminate toughened with glass fabric and Cypek™ DSE film, an average of 55.0 ksi in CAI strength was obtained.

## Claims

1. A thermoplastic composite laminate comprising: a plurality of structural layers in a stacking arrangement, each structural layer comprising reinforcing fibers impregnated with a thermoplastic matrix resin; and a plurality of interlaminar regions, each being formed between two adjacent structural layers, wherein each interlaminar region comprises a toughening material selected from:
(a) nonwoven mat or woven fabric comprising glass fibers, or carbon fibers;
(b) polyaryletherketone (PAEK) polymer film having toughening particles dispersed threrein, wherein the particles are made of a materi.al selected from: PAEK polymers that are different from the PAEK polymer of the· PAEK polymer film, glass, ceramic, and combination thereof;
(c) nonwoven veil comprised of randomly-arranged thermoplastic fibers, and toughening particles dispersed in the veil, wherein the particles are made of a material selected from: PAEK polymers, glass, ceramic, and combination thereof;
(d) toughening particles comprised of a material selected from: PAEK polymers, glass, ceramic, and combination thereof, wherein the toughening particles have a particle size of greater than 3 µm;
(e) metallic mesh, or particles made of a metallic material selected from: aluminum, copper, titanium, nickel, stainless steel, and combination thereof, wherein the particles have a particle size of greater than 3 µm.

2. The thermoplastic composite laminate of claim 1 wherein the thermoplastic matrix resin in the structural layer comprises PAEK.

3. The thermoplastic composite laminate of claim 1 or 2
wherein the reinforcing fibers are made of a material selected from the group consisting of carbon, graphite, and glass.

4. The thermoplastic composite laminate of anyone of claims 1 to 3 wherein the reinforcing fibers in the structural layers are unidirectionally aligned fibers.

5. The thermoplastic composite laminate of anyone of claims 1 to 4 wherein the PAEK polymers of the toughening particles (d) are selected from: polyetherketone (PEK), polyether- etherketone (PEEK), polyetherketoneketone (PEKK) and polyetherketone-etherketoneketone (PEKEKK).

6. The thermoplastic composite laminate of claim 1, wherein the toughening material is a thermoplastic PAEK film (b) or nonwoven veil (c) comprising particles of different PAEK polymers or particles made of a blend of glass and PAEK polymer.

7. The thermoplastic composite laminate of anyone of claims 1 to 4 wherein the toughening material is a PAEK polymer film containing PAEK particles dispersed therein, wherein the particles are made of PAEK polymer with higher melting temperature than the melting temperature of the PAEK polymer film.

8. The thermoplastic composite laminate of anyone of claims 1 to 7 wherein the content of the toughening material is up to 20 % by weight based on the total weight of the matrix resin in the laminate.

9. The thermoplastic composite laminate of anyone of claims 1 to 4, wherein the toughening material is a fiberglass cloth.

10. A composite structure produced by consolidating the thermoplastic composite laminate of anyone of claims 1 to 9.

11. A composite structure comprising: a structural layer comprising reinforcing fibers impregnated with a thermoplastic matrix resin; and two toughening layers positioned on opposing surfaces of the structural layer, each of said toughening layers comprising a toughening material selected from:
(a) nonwoven mat or woven fabric comprising glass fibers, or carbon fibers;
(b) polyaryletherketone (PAEK) polymer film having toughening particles dispersed therein, wherein the particles are made of a material selected from: PAEK polymers that are different from the PAEK polymer of the PAEK polymer film, glass, ceramic, and combination thereof;
(c) nonwoven veil comprised of randomly-arranged thermoplastic fibers, and toughening particles dispersed in the veil, wherein the particles are made of a material selected from: PAEK polymers, glass, ceramic, and combination thereof;
(d) toughening particles comprised of a material selected from: PAEK polymers, glass, ceramic, and combination thereof, wherein the toughening particles have a particle size of greater than 3 µm.

12. The composite structure of claim 11, wherein the thermoplastic matrix resin in the structural layer comprises PAEK.

13. The composite structure of claim 11 or 12, wherein the toughening material is a PAEK polymer film or nonwoven veil containing toughening particles dispersed therein, wherein the particles are made of different PAEK polymers or a mixture of glass and PAEK polymer.

14. The composite structure of claim 11 or 12, wherein the toughening material is a fiberglass cloth.

15. The composite structure of anyone of claims 11 to 14, wherein the reinforcing fibers in the structural layer have a tensile strength of greater than 3500 MPa.

16. The composite structure of anyone of claims 11 to 15, wherein the content of the reinforcing fibers in the structural layer is at least 55 % by weight based on the total weight of the structural layer.

17. The composite structure of anyone of claims 11 to 16, wherein the reinforcing fibers are made of a material selected from the group consisting of carbon, graphite, and glass.

18. A composite laminate produced by laying up a plurality of composite structures of anyone of claims 11 to 17 such that an interlaminar region is formed between two adjacent structural layers1 and said interlaminar region comprises the toughening material.

19. The thermoplastic composite laminate of claim 1 wherein the toughening material is a mixture of different PAEK particles having different melting temperatures.

## Patentansprüche

1. Thermoplastisches Verbundlaminat, umfassend: mehrere Strukturschichten in einer Stapelanordnung, wobei jede Strukturschicht mit einem thermoplastischen Matrixharz imprägnierte Verstärkungsfasern umfasst; und mehrere interlaminare Bereiche, die jeweils zwischen zwei benachbarten Strukturschichten ausgebildet sind, wobei jeder interlaminare Bereich ein zähmachendes Material, das aus
(a) Vliesmatten oder Webstoffen, die Glasfasern oder Kohlefasern umfassen;
(b) Polyaryletherketon(PAEK)-Polymerfolien mit darin dispergierten zähmachenden Teilchen, wobei die Teilchen aus einem Material bestehen, das aus PAEK-Polymeren, die von dem PAEK-Polymer der PAEK-Polymerfolie verschieden sind, Glas, Keramik und einer Kombination davon ausgewählt ist;
(c) Vliesen aus wirr angeordneten thermoplastischen Fasern und in dem Vlies dispergierten zähmachenden Teilchen, wobei die Teilchen aus einem Material bestehen, das aus PAEK-Polymeren, Glas, Keramik und einer Kombination davon ausgewählt ist;
(d) zähmachenden Teilchen, die aus einem Material bestehen, das aus PAEK-Polymeren, Glas, Keramik und einer Kombination davon ausgewählt ist, wobei die zähmachenden Teilchen eine Teilchengröße von mehr als 3 µm aufweisen;
(e) Metallnetzen oder -teilchen aus einem metallischen Material, das aus Aluminium, Kupfer, Titan, Nickel, nicht rostendem Stahl und einer Kombination davon ausgewählt ist, wobei die Teilchen eine Teilchengröße von mehr als 3 µm aufweisen;
ausgewählt ist, umfasst.

2. Thermoplastisches Verbundlaminat nach Anspruch 1, wobei das thermoplastische Matrixharz in der Strukturschicht PAEK umfasst.

3. Thermoplastisches Verbundlaminat nach Anspruch 1 oder 2, wobei die Verstärkungsfasern aus einem Material bestehen, das aus der Gruppe bestehend aus Kohlenstoff, Graphit und Glas ausgewählt ist.

4. Thermoplastisches Verbundlaminat nach einem der Ansprüche 1 bis 3, bei dem es sich bei den Verstärkungsfasern in den Strukturschichten um unidirektional ausgerichtete Fasern handelt.

5. Thermoplastisches Verbundlaminat nach einem der Ansprüche 1 bis 4, wobei die PAEK-Polymere der zähmachenden Teilchen (d) aus Polyetherketon (PEK), Polyetheretherketon (PEEK), Polyetherketonketon (PEKK) und Polyetherketonetherketonketon (PEKEKK) ausgewählt sind.

6. Thermoplastisches Verbundlaminat nach Anspruch 1, wobei es sich bei dem zähmachenden Material um eine thermoplastische PAEK-Folie (b) oder ein Vlies (c), umfassend Teilchen von anderen PAEK-Polymeren oder Teilchen aus einer Mischung von Glas und PAEK-Polymer, handelt.

7. Thermoplastisches Verbundlaminat nach einem der Ansprüche 1 bis 4, wobei es sich bei dem zähmachenden Material um eine PAEK-Polymerfolie, die darin dispergierte PAEK-Teilchen enthält, handelt, wobei die Teilchen aus PAEK-Polymer mit höherer Schmelztemperatur als die Schmelztemperatur der PAEK-Polymerfolie bestehen.

8. Thermoplastisches Verbundlaminat nach einem der Ansprüche 1 bis 7, wobei der Gehalt des zähmachenden Materials bis zu 20 Gew.-%, bezogen auf das Gesamtgewicht des Matrixharzes in dem Laminat, beträgt.

9. Thermoplastisches Verbundlaminat nach einem der Ansprüche 1 bis 4, wobei es sich bei dem zähmachenden Material um ein Glasfasertuch handelt.

10. Verbundkonstruktion, hergestellt durch Konsolidieren des thermoplastischen Verbundlaminats nach einem der Ansprüche 1 bis 9.

11. Verbundkonstruktion, umfassend: eine Strukturschicht, die mit einem thermoplastischen Matrixharz imprägnierte Verstärkungsfasern umfasst; und zwei zähmachende Schichten, die auf gegenüberliegenden Seiten der Strukturschicht angeordnet sind, wobei jede der zähmachenden Schichten ein zähmachendes Material, das aus
(a) Vliesmatten oder Webstoffen, die Glasfasern oder Kohlefasern umfassen;
(b) Polyaryletherketon(PAEK)-Polymerfolien mit darin dispergierten zähmachenden Teilchen, wobei die Teilchen aus einem Material bestehen, das aus PAEK-Polymeren, die von dem PAEK-Polymer der PAEK-Polymerfolie verschieden sind, Glas, Keramik und einer Kombination davon ausgewählt ist;
(c) Vliesen aus wirr angeordneten thermoplastischen Fasern und in dem Vlies dispergierten zähmachenden Teilchen, wobei die Teilchen aus einem Material bestehen, das aus PAEK-Polymeren, Glas, Keramik und einer Kombination davon ausgewählt ist;
(d) zähmachenden Teilchen, die aus einem Material bestehen, das aus PAEK-Polymeren, Glas, Keramik und einer Kombination davon ausgewählt ist, wobei die zähmachenden Teilchen eine Teilchengröße von mehr als 3 µm aufweisen;
ausgewählt ist, umfasst.

12. Verbundkonstruktion nach Anspruch 11, wobei das thermoplastische Matrixharz in der Strukturschicht PAEK umfasst.

13. Verbundkonstruktion nach Anspruch 11 oder 12, wobei es sich bei dem zähmachenden Material um eine PAEK-Polymerfolie oder ein Vlies mit darin dispergierten zähmachenden Teilchen handelt, wobei die Teilchen aus anderen PAEK-Polymeren oder einer Mischung von Glas und PAEK-Polymer bestehen.

14. Verbundkonstruktion nach Anspruch 11 oder 12, wobei es sich bei dem zähmachenden Material um ein Glasfasertuch handelt.

15. Verbundkonstruktion nach einem der Ansprüche 11 bis 14, wobei die Verstärkungsfasern der Strukturschicht eine Zugfestigkeit von mehr als 3500 MPa aufweisen.

16. Verbundkonstruktion nach einem der Ansprüche 11 bis 15, wobei der Gehalt der Verstärkungsfasern in der Strukturschicht mindestens 55 Gew.-%, bezogen auf das Gesamtgewicht der Strukturschicht, beträgt.

17. Verbundkonstruktion nach einem der Ansprüche 11 bis 16, wobei die Verstärkungsfasern aus einem Material aus der Gruppe bestehend aus Kohle, Graphit und Glas bestehen.

18. Verbundlaminat, hergestellt durch Auflegen von mehreren Verbundkonstruktionen nach einem der Ansprüche 11 bis 17 derart, dass zwischen zwei benachbarten Strukturschichten ein interlaminarer Bereich gebildet wird und der interlaminare Bereich das zähmachende Material umfasst.

19. Thermoplastisches Verbundlaminat nach Anspruch 1, wobei es sich bei dem zähmachenden Material um eine Mischung von verschiedenen PAEK-Teilchen mit verschiedenen Schmelztemperaturen handelt.

## Revendications

1. Stratifié composite thermoplastique comprenant : une pluralité de couches structurales dans une configuration superposée, chaque couche structurale comprenant des fibres de renforcement imprégnées d'une résine matricielle thermoplastique ; et une pluralité de régions interlaminaires, chacune étant formée entre deux couches structurales adjacentes, chaque région interlaminaire comprenant un matériau de renforcement sélectionné parmi :
(a) un mat non tissé ou un tissu tissé comprenant des fibres de verre, ou des fibres de carbone ;
(b) un film polymère de polyaryléthercétone (PAEK) dans lequel sont dispersées des particules de renforcement, les particules se composant d'un matériau sélectionné parmi : des polymères de PAEK qui sont différents du polymère de PAEK du film polymère de PAEK, un verre, une céramique, et des combinaisons de ceux-ci ;
(c) un voile non tissé constitué de fibres thermoplastiques disposées de façon aléatoire, et de particules de renforcement dispersées dans le voile, les particules se composant d'un matériau sélectionné parmi : des polymères de PAEK, un verre, une céramique, et des combinaisons de ceux-ci ;
(d) des particules de renforcement qui se composent d'un matériau sélectionné parmi : des polymères de PAEK, un verre, une céramique, et des combinaisons de ceux-ci, les particules de renforcement ayant une taille de particule supérieure à 3 µm ;
(e) une maille métallique, ou des particules constituées d'un matériau métallique sélectionné parmi : l'aluminium, le cuivre, le titane, le nickel, l'acier inoxydable, et des combinaisons de ceux-ci, les particules ayant une taille de particule supérieure à 3 µm.

2. Stratifié composite thermoplastique selon la revendication 1, dans lequel la résine matricielle thermoplastique dans la couche structurale comprend de la PAEK.

3. Stratifié composite thermoplastique selon la revendication 1 ou 2, dans lequel les fibres de renforcement se composent d'un matériau sélectionné dans le groupe constitué du carbone, du graphite et du verre.

4. Stratifié composite thermoplastique selon l'une quelconque des revendications 1 à 3, dans lequel les fibres de renforcement présentes dans les couches structurales sont des fibres à alignement unidirectionnel.

5. Stratifié composite thermoplastique selon l'une quelconque des revendications 1 à 4, dans lequel les polymères de PAEK des particules de renforcement (d) sont sélectionnés parmi : la polyéthercétone (PEK), la polyéther-éthercétone (PEEK), la polyéthercétonecétone (PEKK) et la polyéthercétone-éthercétonecétone (PEKEKK).

6. Stratifié composite thermoplastique selon la revendication 1, dans lequel le matériau de renforcement est un film de PAEK thermoplastique (b) ou un voile non tissé (c) comprenant des particules de différents polymères de PAEK ou des particules constituées d'un mélange de verre et de polymère de PAEK.

7. Stratifié composite thermoplastique selon l'une quelconque des revendications 1 à 4, dans lequel le matériau de renforcement est un film polymère de PAEK contenant des particules de PAEK qui y sont dispersées, les particules se composant d'un polymère de PAEK ayant une température de fusion plus élevée que la température de fusion du film polymère de PAEK.

8. Stratifié composite thermoplastique selon l'une quelconque des revendications 1 à 7, dans lequel la quantité du matériau de renforcement est de jusqu'à 20 % en poids relativement au poids total de la résine matricielle présente dans le stratifié.

9. Stratifié composite thermoplastique selon l'une quelconque des revendications 1 à 4, dans lequel le matériau de renforcement est un tissu en fibre de verre.

10. Structure composite produite par amalgamation du stratifié composite thermoplastique selon l'une quelconque des revendications 1 à 9.

11. Structure composite comprenant : une couche structurale comprenant des fibres de renforcement imprégnées d'une résine matricielle thermoplastique ; et deux couches de renforcement positionnées sur des surfaces opposées de la couche structurale, chacune desdites couches de renforcement comprenant un matériau de renforcement sélectionné parmi :
(a) un mat non tissé ou un tissu tissé comprenant des fibres de verre, ou des fibres de carbone ;
(b) un film polymère de polyaryléthercétone (PAEK) dans lequel sont dispersées des particules de renforcement, les particules se composant d'un matériau sélectionné parmi : des polymères de PAEK qui sont différents du polymère de PAEK du film polymère de PAEK, un verre, une céramique, et des combinaisons de ceux-ci ;
(c) un voile non tissé constitué de fibres thermoplastiques disposées de façon aléatoire, et de particules de renforcement dispersées dans le voile, les particules se composant d'un matériau sélectionné parmi : des polymères de PAEK, un verre, une céramique, et des combinaisons de ceux-ci ;
(d) des particules de renforcement qui se composent d'un matériau sélectionné parmi : des polymères de PAEK, un verre, une céramique, et des combinaisons de ceux-ci, les particules de renforcement ayant une taille de particule supérieure à 3 µm.

12. Structure composite selon la revendication 11, dans laquelle la résine matricielle thermoplastique présente dans la couche structurale comprend de la PAEK.

13. Structure composite selon la revendication 11 ou 12, dans laquelle le matériau de renforcement est un film polymère de PAEK ou un voile non tissé contenant des particules de renforcement qui y sont dispersées, les particules se composant de différents polymères de PAEK ou d'un mélange de verre et de polymère de PAEK.

14. Structure composite selon la revendication 11 ou 12, dans laquelle le matériau de renforcement est un tissu en fibre de verre.

15. Structure composite selon l'une quelconque des revendications 11 à 14, dans laquelle les fibres de renforcement présentes dans la couche structurale ont une résistance à la traction supérieure à 3 500 MPa.

16. Structure composite selon l'une quelconque des revendications 11 à 15, dans laquelle la quantité des fibres de renforcement présentes dans la couche structurale est d'au moins 55 % en poids relativement au poids total de la couche structurale.

17. Structure composite selon l'une quelconque des revendications 11 à 16, dans laquelle les fibres de renforcement se composent d'un matériau sélectionné dans le groupe constitué du carbone, du graphite et du verre.

18. Stratifié composite produit en disposant une pluralité de structures composites selon l'une quelconque des revendications 11 à 17 de telle sorte qu'une région interlaminaire soit formée entre deux couches structurales adjacentes et que ladite région interlaminaire comprenne le matériau de renforcement.

19. Stratifié composite thermoplastique selon la revendication 1, dans lequel le matériau de renforcement est un mélange de différentes particules de PAEK ayant différentes températures de fusion.
